Europäisches Patentamt

European Patent Office

Office européen des brevets

(11) Publication number: **0 100 182**
**B1**

## (12) EUROPEAN PATENT SPECIFICATION

(45) Date of publication of patent specification: **17.09.86**

(51) Int. Cl.⁴: **C 10 G 11/18, B 01 J 8/24**

(21) Application number: **83304058.7**

(22) Date of filing: **13.07.83**

(54) Method and apparatus for separating finely divided catalyst particles from a gas stream.

(30) Priority: **22.07.82 US 400843**

(43) Date of publication of application:
**08.02.84 Bulletin 84/06**

(45) Publication of the grant of the patent:
**17.09.86 Bulletin 86/38**

(84) Designated Contracting States:
**BE DE FR GB IT NL**

(56) References cited:
**FR-A-1 400 367**
**GB-A-1 351 624**
**GB-A-2 063 296**
**US-A-4 043 899**
**US-A-4 070 159**
**US-A-4 219 407**
**US-A-4 310 489**

(73) Proprietor: **MOBIL OIL CORPORATION**
**150 East 42nd Street**
**New York New York 10017 (US)**

(72) Inventor: **Haddad, James Henry**
**45 Van Wyck Drive**
**Princeton Junction New Jersey 08550 (US)**
Inventor: **Krambeck, Frederick John**
**108 Green Vale Road**
**Cherry Hill New Jersey 08034 (US)**

(74) Representative: **West, Alan Harry**
**Mobil Court 3 Clements Inn**
**London WC2A 2EB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to the separation of cataylst particles from a gas stream with special reference to catalytic cracking units.

The field of catalytic cracking, particularly fluid catalyst operations, has undergone significant improvements due primarily to advances in catalyst technology and product distribution. With the advent of high activity catalysts and particularly crystalline zeolite cracking catalysts, new areas of operating technology have been encountered requiring even further refinements in processing techniques to take advantage of the high catalyst activity, selectivity and operating sensitivity.

Of particular concern in this field has been the development of methods and systems for separating gaseous products from fluidized catalyst particles, particularly from high activity crystalline zeolite cracking catalyst particles, under efficient conditions so as to reduce overcracking of conversion products and to promote the recovery of desired products of the cracking operation. However, present day cyclonic equipment often permits undesired extended contact between the cracked products and the catalyst. This extended contact has been found to contribute to the loss of up to about 10 percent of desired product and it has been determined that the gasoline yield loss due to overcracking can be from 0.15 to 1.5 volume percent, based on fresh feed. Recent developments in this field have been concerned with the separation and recovery of entrained catalyst particles from gaseous products in short contact riser processes.

In conventional riser cracking processes, the cataylst employed is preferably a high activity crystalline zeolite catalyst of fluidizable particle size which is transferred in a suspended or dispersed state generally upwardly through one or more risers at such a rate as to provide a residence time from 0.5 to 10 seconds and more usually less than 8 seconds. Temperatures of at least 540°C at 0.5 to 4 seconds residence time in the riser is desirable for some operations before separation of vaporous hydrocarbon product from the catalyst. Rapid separation of catalyst from hydrocarbons discharged from the riser is particularly desirable for restricting hydrocarbon conversion time. During the hydrocarbon conversion step, carbonaceous deposits accumulate on the catalyst particles and the particles entrain hydrocarbon vapors. The entrained hydrocarbons are then subjected to further contact with the catalyst until removed from the catalyst by mechanical means and/or by means of a stripping gas in a separated-catalyst stripping zone. Hydrocarbon conversion products separated from the catalyst and stripped materials are then combined and passed to a product fractionation step. Stripped catalyst containing deactivating amounts of carbonaceous material (referred to as coke) is then passed to a catalyst regeneration operation.

Various processes and mechanical means have been proposed to separate the catalyst from the hydrocarbon at the termination of the riser cracking operation.

U.S. Patent 4,043,899 describes a method for rapid separation of a product suspension comprising fluidized catalyst particles and the vaporous hydrocarbon product by discharging the entire suspension directly from the riser into a cyclonic separation zone which provides cyclonic stripping of the catalyst after it is separated from the hydrocarbon vapors. In that method, the cyclone separator is modified to include an additional downwardly-extending section comprising a lower cyclone stage. In this arrangement, catalyst separated from the gaseous material in the upper stage slides down a sloping baffle to the lower cyclone where stripping steam is introduced to further separate entrained hydrocarbon product from the catalyst recovered from the upper cyclone. The steam and the stripped hydrocarbons are then passed from the lower cyclone through a concentric pipe where they are combined with the hydrocarbon vapors separated in the upper cyclone. The separated and stripped catalyst is then collected and passed from the cyclone separator through a conventional dip-leg. This process requires that the entire volume of catalyst, gas phase and stripping steam passes through the cyclone separator which means that this equipment must be designed to efficiently handle not only a large vapor volume but also a large quantity of solid particles.

U.S. Patent 4,070,159 provides a separation means whereby the bulk of the solids is discharged directly into a settling chamber without passing through a cyclone separator. In that apparatus the discharge end of the riser is in open communication with a disengaging chamber such that the catalyst dicharges from the riser in a vertical direction into the disengaging chamber which is otherside essentially closed to the flow of gases. The cyclone separation system is in open communication with the riser by means of a port located upstream from but close to the discharge end of the riser. A deflector cone mounted directly above the terminus of the riser causes the catalyst to be directed in a downward path so as to prevent the catalyst from abrading the upper end of the disengaging vessel. The cyclone separator is of the usual configuration employed in a catalyst cracking unit to separate entrained catalyst particles from the cracked hydrocarbon products so that the catalyst passes through the dip-leg of the cyclone to the body of the catalyst in the lower section of the disengaging vessel and the vapor phase is directed from this vessel to a conventional fractionation unit. There is essentially no net flow of gases with the disengaging vessel beyond that resulting from a moderate amount of steam introduced to strip the catalyst residing in the bottom of the disengaging vessel.

U.S. patent 4,219,407 describes the separation of the catalyst from the gaseous cracked products in a fashion which permits effective steam stripping of the catalyst. The suspension of catalyst and gaseous material is discharged from the riser outwardly through radially-extending passageways which terminate in a downward direction. Catalyst stripping zones are located beneath the terminus of each of the radially extending passageways. Each stripper consists of a vertical chamber open at the top and the bottom and with downwardly sloping baffles located within the chamber so as to cause the catalyst to flow in a discontinuous manner coutercurrent to upwardly flowing stripping steam introduced at the lower end of the stripping chamber. The radially extending arms are provided with a curved inner surface and confining sidealls to impart a cyclonic concentration of catalyst particles promoting a forced separation from the hydrocarbon vapors discharged as a suspension from the riser. This separation of the catalyst from the vapors is basically achieved through rapid changes in direction of the several phases. Thus the cyclonic collection and concentration of catalyst particles is used to reverse the flow of separated catalyst such that it is concentrated as a downwardly confined stream which discharges downwardly and into the open upper end of the catalyst stripping chamber. A vapor-disengaging space is provided between the discharge end of the radially-extending arms and the top of the catalyst strippers to promote the rapid removal of separated vapors from out of contact with discharged catalyst. The separated vapors pass upwardly through the disengaging vessel to the open inlet of a cyclone separator which removes entrained catalyst from the gaseous material for return through a dip-leg to the body of steam-stripped catalyst while the separated vapor material passes to a fractionation unit. The hydrocarbon product, as it passes within the disengaging vessel from the discharge of the radially-extending arms to the cyclone separator, travels in a random fashion and is exposed to catalytic reaction temperatures which cause undesirable side reactions and thermal cracking before these vapors enter a quench zone in the main fractionator of the unit.

The present invention seeks to provide a process and an apparatus which represent improvements over the presently available processes and apparatuses, particularly those described in U.S. Patent 4,219,407, by enabling the length of time the gaseous material is subjected to high temperature after separation from the bulk of the catalyst to be minimized so as to reduce overcracking and thermal cracking of the cracked products.

According to the invention, there is provided a process for the fluid catalytic cracking of mineral oil which comprises catalytically cracking the mineral oil by passing a suspension of catalyst particles in mineral oil vapor upwardly through a riser reaction zone under cracking conditions into a disengaging zone where catalyst particles are separated from cracked mineral oil vapors, regenerating the catalyst particles to remove carbonaceous deposits and passing the regenerated catalyst particles to the riser reaction zone, the catalyst particles being separated from the cracked mineral oil vapors by the steps of

(a) discharging the suspension of catalyst particles in cracked mineral oil vapors from the riser (2,102) outwardly through an opening in the upper periphery of the riser and through a radially extending restricted passageway (6,106) having an opening (10,110) in its lower side to produce a substantially confined catalyst stream that discharges in a downward direction generally separate from the cracked mineral oil vapors, the restricted passageway curving downwardly adjacent its outer end to induce a downward movement on the confined catalyst stream in the passageway sufficent to direct the stream downwardly into the open upper end of a catalyst stripping passageway (12,112) positioned beneath the outer end of the passageway to maintain the catalyst particles separate from said discharged cracked mineral oil vapors, and

(b) passing the cracking mineral oil vapors through the disengaging zone (4,104) to its upper portion and into the entrance of a cyclone separator (18,118), characterized in that the cracked mineral oil vapors are discharged from the outer extremity of the radially extending restricted passageway into a vertically disposed elongated restricted passageway (16,116) in fluid communication with the inlet of the cyclone separator so that the cracked mineral oil vapors are directed from the outer extremity of the radially extending restricted passageway into the cyclone separator.

The present invention also provides apparatus for the separation of catalyst particles from a gas stream which comprises:

(a) a disengaging vessel (104) serving as a reservoir for collected catalyst particles,

(b) a vertically disposed elongated tubular conduit (102) having an upsteam end and a downstream end, the latter terminating within the disengaging vessel,

(c) a radially extending restricted passageway (106) having an inlet communicating with the elongate tubular conduit at the downstream end of the latter and an opening (110) along its lower side adapted to discharge catalyst particles in a downward direction as a substantially confined catalyst stream,

(d) a cyclone separator (118) adapted to separate entrained catalyst particles from the gas stream, to discharge separated catalyst particles into the disengaging vessel and to discharge the gas stream externally of the disengaging vessel.

(e) a vertically disposed catalyst stripping passageway (112) positioned below and in open communication with the lower opening of the radially extending restricted passageway and adapted to receive the substantially confined catalyst stream into its upper end, and

(f) a vertically disposed elongated restricted passageway (116) in direct fluid communication with the upper end of the catalyst stripping passageway and the inlet of the cyclone separator and in open fluid communication with the bottom

opening of the radially extending restricted passageway, the verticlly disposed restricted passageway surrounding and containing the radially extending restricted passageway.

The present invention further provides apparatus for the separation of catalyst particles from a gas stream which comprises:

(a) a disengaging vessel (4) serving as a reservoir for collected catalyst particles;

(b) a vertically disposed elongated tubular conduit (2) having an upstream end and a downstream end, the latter terminating within the disengaging vessel,

(c) a radially extending restricted passageway (6) having an inlet communicating with said elongated tubular conduit at the downstream end of the latter, an opening (10) along its lower side and an opening in its uppers side at its downstream extremity, the lower opening being adapted to discharge catalyst particles in a downward direction as a substantially confined catalyst stream into the interior of the disengaging vessel,

(d) a cyclone separator (18) adapted to separate entrained catalyst particles from the gas stream, to discharge separated catalyst particles into the disengaging vessel and to discharge the gas stream externally of the disengaging vessel, and

(e) a vertically disposed elongated restricted passageway (16) communicating with the upper opening of the downstream extremity of the radially extending restricted passageway and the inlet of the cyclone separator.

The present invention can be considered as providing improvements in the process and apparatus described in U.S. Patent 4,219,407.

As described in that patent, the separation of catalyst particles from gaseous material is particularly relevant in a hydrocarbon conversion process such as catalytic cracking which comprises a catalytic hydrocarbon conversion operation and a catalyst regeneration operation. In the hydrocarbon conversion portion of this combination operation, it is desired to employ a high activity crystalline zeolite catalyst such as a faujasite "Y" zeolite-containing cracking catalyst. The hydrocarbon conversion operation is preferably a dispersed catalyst phase riser conversion operation of limited or restricted hydrocarbon contact time between catalyst and hydrocarbon reactant selected to particularly promote the formation of desired products including gasoline boiling-range materials as well as lighter and higher boiling products. Thus the conversion of gas oil feeds and higher boiling hydrocarbon materials in a single riser reactor is carried out at temperatures in excess of 480°C and as high as 570 or 600°C. In such hydrocarbon conversion operations, the catalyst-hydrocarbon residence time in a riser reaction zone is usually restricted to less than 15 seconds and is desirably restricted depending on reaction temperature and feed composition, to 0.5 to 8 seconds hydrocarbon residence time. For high temperature operations it is is preferred to restrict the hydrocarbon residence time in contact with catalyst 0.5 to 4 seconds and to minimize overcracking of desired products by effecting a rapid separation of the catalyst suspension substantially immediately upon its discharge from the riser. The present invention is concerned particularly with obtaining rapid separation of the catalyst suspension discharged from a high temperature riser cracking zone.

The invention involves separating the suspension discharged from the riser under conditions that result in collecting the catalyst particles in a zone separate from discharged gaseous material and altering the flow direction of the collected catalyst particles to flow out of contact with gaseous material as a downwardly confined stream. The collected and confined catalyst particle stream thus separated is discharged into an open ended restricted downflow passageway, as described in U.S. Patent 4,217,407, in which the catalyst particles are maintained out of contact with hydrocarbon vapors. The downflow passageway referred to as a catalyst stripping zone is positioned beneath the catalyst separation and collection means so that the separated and confined catalyst stream is maintained out of further contact with discharged hydrocarbon vapors. As the catalyst flows through the stripping zone it cascades over downwardly sloping baffles so as to contact upwardly flowing steam which removes hydrocarbons from the surface of the catalyst particles and from the interstitial space between the particles. In the known process, the hydrocarbon vapors pass from the radially extending arms together with the catalyst but move out from under the open discharge of the arms into a lower velocity region and into the upper portion of the disengaging vessel at reduced velocity. The separated vapors then pass into the inlet of cyclone separating equipment positioned in the upper part of the disengaging vessel.

According to one aspect of the invention, a conduit is provided at the end of the radially extending arm communicating with the upper portion of the arm and the inlet of the cyclone separator. In this manner the gaseous material may be passed directly to the cyclone separators at a significantly higher velocity than in the prior art process. This makes it possibe to expose the gaseous material to cracking temperatures for a shorter period of time than in the prior art. The temperatures of the gaseous material may be reduced or quenched by providing cooling means in the gas conduit or by merely passing the gaseous material for quenching in the base of the main fractionator of the fluid catalytic cracking out.

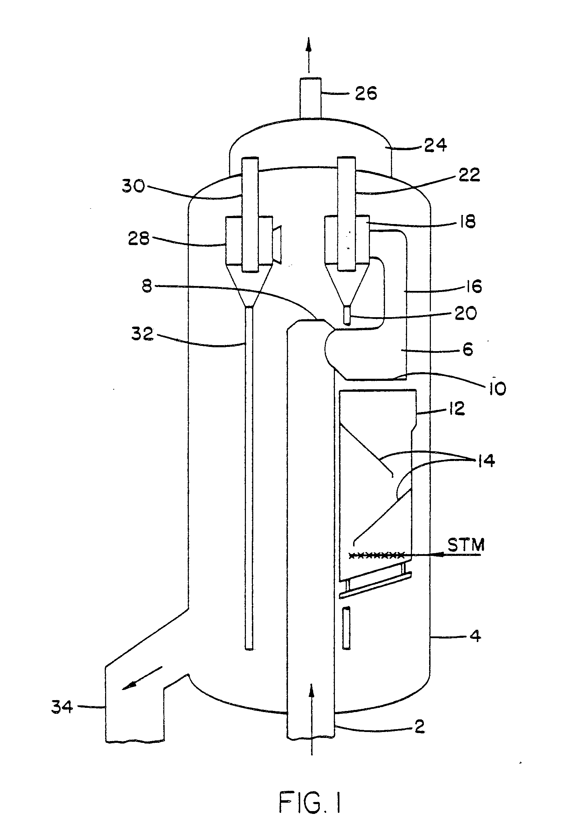

The invention will now be described in greater detail by way of example only with reference to the accompanying drawings, in which Figure 1 illustrates one form of apparatus according to the invention;

Figure 2 illustrates a second form of apparatus according to the invention; and

Figure 3 is a sectional view along line 3—3 of Figure 2.

Referring to Figure 1 of the drawings, there is shown the upper end of a riser hydrocarbon conversion zone 2 extending upwardly into a disengaging vessel 4. The riser terminates in an upper intermediate portion of vessel 4 with a horizontal cross member arm referred to as radially extending restricted passageway 6. For illustrative purposes, only one radially extending restricted passageway is shown but it will be appreciated that normally 2, 3, 4 or more of these radial passageways extending generally horizontally outwardly from the upper capped end 8 of riser 2 will be provided, as the need dictates. The bottom side of radial passageway 6 is open communication with the interior of vessel 4, the opening 10 pointing downwardly. Positioned below opening 10 is a catalyst collecting and stripping vessel 12 provided with a plurality of downward sloping baffles 14 to allow stripping steam, which enters at the lower end of vessel 12, to intimately contact the downwardly cascading catalyst. The vessel 12 has an upper open end enlarged to provide a funnel-shaped collecting zone for the catalyst discharged from the radial passageway 6. The bottom end of vessel 12 is also open-ended to permit the stripped catalyst to pass the body of stripped catalyst collected in the lower end of vessel 4.

The upper end of the radial passageway 6 is in direct fluid communication with an elongated restricted passageway 16 which in turn is in direct fluid communication with the inlet of a cyclone separator 18. Passageway 16 provides the gaseous material with a means for rapid transfer from the radial passageway to the cyclone separator. Cylone separator 18 is conventionally provided with a dip-leg 20 to return separate solid catalyst particles to the body of catalyst in the lower portion of vessel 4. Vapor outlet 22 conducts the separated vapor directly to a plenum chamber 24 for removal from vessel 4 through a line 26 for passage to product fractionation equipment, not shown. Stripping steam together with the hydrocarbons stripped from the catalyst flow from the top of the stripping vessel 12 and pass to the upper portion of vessel 4 into cyclone 28 which is in open communication with the interior of vessel 4. Cyclone 28 is provided with a dip-leg 32 which delivers separated catalyst particles to the body of catalyst in the lower section of vessel 4. Vapor outlet 30 conducts the vapors separated in cyclone 28 to plenum chamber 24 and line 26 for delivery to a fractionation unit.

When the apparatus is in use, a suspension of fluidized catalyst particles in gaseous material such as hydrocarbon vapors, flows upwardly through riser 2 and outwardly through radially extending arm 6. The top of the riser is capped and the end of the radially extending arm is terminated with an opening in the upper surface which communicates with restricted passageway 16. The lower surface of radial arm 6 is provided with an opening which is in open communication with vessel 4 and catalyst collecting and stripping vessel 12. The abrupt change in direction of the suspension from horizontal flow to vertical flow at the end of the radial arm establishes inertial forces which cause a concentration of the catalyst portion of the suspension and hence a separation from the hydrocarbon vapors. Gravity forces cause the concentrated catalyst to pass vertically downwardly through opening 10 of radial arm 6 for discharge into the open upper end of stripping vessel 12. Some gaseous material exits from radial arm 6 along with the catalyst, moves out from under the open end of the radial arm into a lower velocity region, then into the upper portion of vessel 4 and finally into cyclone 28 for removal of any catalyst particles entrained therein. Alternatively, cyclone 28 could be omitted and an exit port for the extra gasiform material provided in conduit 16.

The flow of the suspension up through the riser and out through the radial arm constitutes several abrupt changes in direction. The inertial forces developed cause the bulk of the gaseous material to be separated from the catalyst and to flow preferentially to the upper exit of radial arm 6. The vapors thus separated pass upwardly through restricted passageway 16 which provides a rapid transmission of the cracked vapors to cyclone separator 18 positioned in the upper portion of vessel 4. The principal purpose of the restricted passageway is to reduce the time the cracked vapors are exposed to elevated temperatures, in contrast to being passed at lower velocity through the upper portion of vessel 4 to the cyclone separator. By providing a direct path for the vapors to be transported out of the elevated temperature zone, they may be quenched in the main fractionator of the processing unit, thereby limiting undesirable overcracking. To further reduce the exposure of these vapors to elevated temperatures, means to lower their temperature (not shown in the drawing) may be provided in restricted passageway 16. Such indirect cooling as steam or water coils, or direct cooling as injected liquid or gaseous quench may be provided. These techniques are well known to those skilled in the art.

Cyclone separators 18 and 28 may be located in the upper portion of vessel 4 or externally. They may be single or multiple stage and may comprise sequentially arranged units, as required. Cyclone separator 18 communicates directly with each of the radially extending arms provided to handle the bulk of the separated vapors while the other separator 28 is in open communication with the interior of the upper portion of vessel 4 to handle the vapors which exit through the open end of each radial arm as well as the hydrocarbons stripped from the catalyst in the steam strippers and the steam vapors which have done the stripping. Both cyclone separators are provided with dip-legs (20 and 32) to return the entrained catalyst to the body of stripped catalyst. The catalyst is removed through a conduit 34 for passage to a separate vessel for regeneration by conventional means, now shown. The separated gaseous material is removed from each cyclone by vapor outlets 22 and 30 through plenum chamber 24 and passed to a fractionation unit (not shown) by conduit 26.

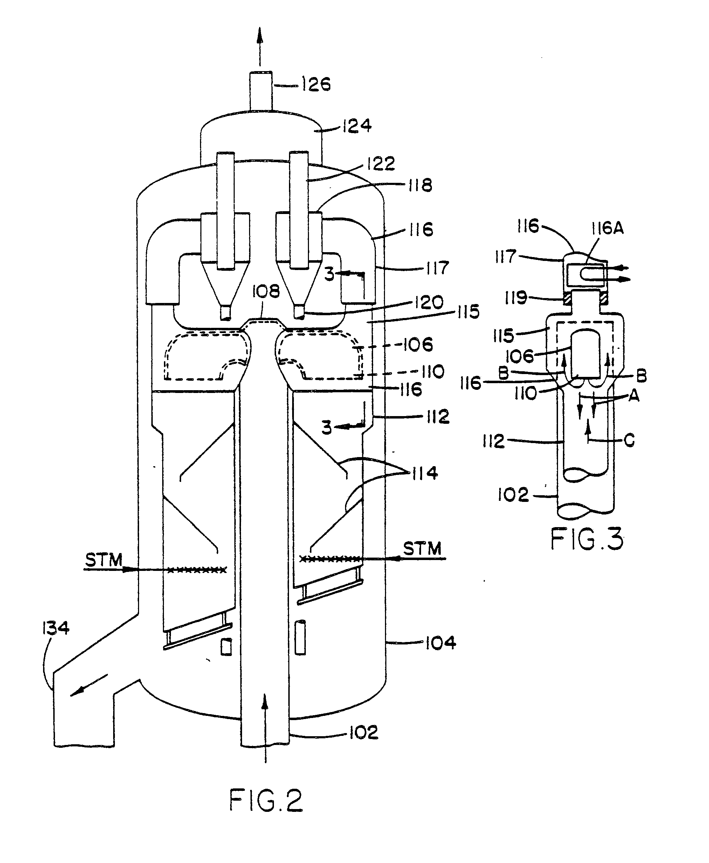

Another aspect of the invention, which is particularly preferred, is shown in Figures 2 and 3 of the drawings.

Referring to Figures 2 and 3, the upper end of a riser hydrocarbon conversion zone 102 extends upwardly into a disengaging vessel 104. The riser terminates in an upper intermediate portion of vessel 104 with a horizontal cross member arm referred to as radially extending restricted passageway 106. For illustrative purposes, two radially extending restricted passageways are shown but it will be appreciated that normally 3, 4 or more of these radial passageways extending generally horizontally outwardly from the upper capped end 108 of riser 102 will be provided as the need dictates. In the following description only one of the radially extending restricted passageways and its attendant apparatus will be discussed.

The lower portion of radial passageway 106 is provided with an opening 110 and is in open communication with the vapor disengaging space therebelow. Positioned below opening 110 is a catalyst collecting and stripping vessel 112 provided with a plurality of downward sloping baffles 114 to allow stripping steam, which enters at the lower end of vessel 112, to intimately contact downwardly cascading catalyst. Vessel 112 has an upper open end enlarged to provide a funnel-shaped collecting zone for the catalyst discharged from radial passageway 106. The bottom end of vessel 112 is also open-ended to permit the stripped catalyst to pass to the body of stripped catalyst collected in the lower end of vessel 104.

The open lower portion 110 of radial passageway 106 is in open communication with a restricted passageway 116 which in turn is in direct fluid communication with the inlet of a cyclone separator 118 and stripping vessel 112. Restricted passageway 116 consists of a lower portion 115 and an upper portion 117, both portions being connected by packed slip joint 119 which compensates for thermal expansion. Restricted passageway 116 is completely enclosed to provide a direct path from open end 110 and stripping vessel 112 to cyclone 118. Therefore, passageway 116 completely surrounds and contains radially extending restricted passageway 106 in spaced relationship thereto and is connected to the top of stripping vessel 112 and the inlet to cyclone 118. Passageway 116 provides a means for rapid transfer of the gaseous material exiting radial passageway 106 and the stripping steam and stripped hydrocarbons leaving the top of stripping vessel 112 directly to cyclone separator 118. Cyclone separator 118 is conventionally provided with a dip-leg 120 to return separated solid catalyst particles to the body of catalyst in the lower portion of vessel 104. Vapor outlet 122 conducts the separate vapor directly to a plenum chamber 124 for removal from vessel 104 through line 126 for passage to product fractionation equipment, not shown.

When the apparatus is in use, a suspension of fluidizable catalyst particles in gaseous material such as hydrogen vapors, flows upwardly through riser 102 and outwardly through radially extending arm 106. The top of the riser is capped and the end of the radially extending arm is terminated in an opening 110 disposed in a downward direction. This opening is in open communication with stripper vessel 112. The abrupt change in direction of the suspension from vertical flow to horizontal flow and then to a downward pattern by the internal curved surface of the radial passageway establishes centrifugal forces which cause a concentration of the catalyst portion of the suspension and hence a separation from, the hydrocarbon vapors. Referring in particular to the Figure 3, the concentrated catalyst passes along the curved surface of the radial passageway for discharge downwardly from opening 110 into the open upper end of stripping vessel 112, as illustrated by arrows A in Figure 3. The gaseous part of the suspension comprising hydrocarbon vapors thus centrifugally separated from entrained catalyst particles in the disengaging space provided between opening 110 of the passageway 106 and vessel 112 moves out from under radially extending restricted passageway into restricted passageway 116, as illustrated by arrows B, where it is joined by stripped hydrocarbons and stripping steam leaving the top of stripping vessel 112, as illustrated by arrow C. These combined vapors pass upwardly through restricted passageway 116 which provides a rapid transmission of the cracked vapors to cyclone separator 118 positioned in the upper portion of vessel 104. The principal purpose of restricted passageway 116 is to reduce the time the cracked vapors are exposed to elevated temperatures in contrast to being passed randomly and at lower velocity through the upper portion of vessel 104 to the cyclone separator. By providing a direct path for the vapors to be transported out of the elevated temperature zone, they may be quenched in the main fractionator of the processing unit, thereby limiting undesirable overcracking. To further reduce the exposure of these vapors to elevated temperatures, means to lower their temperature 116A may be provided in restricted passageway 116. Such indirect cooling, as steam or water coils, or direct cooling as injected liquid or gaseous quench may be provided. These techniques are well known to those skilled in the art.

Cyclone separator may be located in the upper portion of vessel 104 or externally and may be single or multiple stage or may comprise sequentially arranged units, as required. The cyclone separator communicates directly with each of the radial extending arms and the stripping vessels to handle the separated vapors as well as the hydrocarbons stripped from the catalyst in the steam strippers and the steam vapors which have done the stripping. Cyclone separator 118 is provided with a dip-leg 120 to return entrained catalyst to the body of stripped catalyst. The catalyst is removed through a conduit 134 for passage to a separate vessel for regeneration by conventional means, not shown. The separated gaseous material is removed from the cyclone by vapor outlet 122 through a plenum chamber 124 and passed to a fractionation unit (not shown) by a conduit 126.

In carrying out the process of the invention, the separation of catalyst from gaseous materials is achieved efficiently while concomitantly minimizing the length of time that the gaseous materials are subjected to elevated reaction temperature after separation from the catalyst. The separation arrangement provided at the riser outlet contributes in substantial measure to achieving these results. The catalyst stripper may be an annular chamber when several radial arms or passageways are employed or a separate chamber associated with each radial passageway. Similarly, the restricted passageway between the end of a radially extending restricted passageway and the inlet to the cyclone may comprise a separate conduit for each radial passageway or a header joining each radial passageway with a single large conduit connecting the vapor header to the cyclone.

**Claims**

1. A process for the fluid catalytic cracking of mineral oil which comprises catalytically cracking the mineral oil by passing a suspension of catalyst particles in mineral oil vapor upwardly through a riser reaction zone under cracking conditions into a disengaging zone where catalyst particles are separated from cracked mineral oil vapors, regenerating the catalyst particles to remove carbonaceous deposits and passing the regenerated catalyst particles to the riser reaction zone, the catalyst particles being separated from the cracked mineral oil vapors by the steps of

(a) discharging the suspension of catalyst particles in cracked mineral oil vapors from the riser (2,102) outwardly through an opening in the upper periphery of the riser and through a radially extending restricted passageway (6,106) having an opening (10,110) in its lower side to produce a substantially confined catalyst stream that discharges in a downward direction generally separate from the cracked mineral oil vapors, the restricted passagway curving downwardly adjacent its outer end to induce a downward movement on the confined catalyst stream in the passageway sufficient to direct the stream downwardly into the open upper end of a catalyst stripping passageway (12, 112) positioned between the outer end of the passageway to maintain the catalyst particles separate from said discharged cracked mineral oil vapors, and

(b) passing the cracking mineral oil vapors through the disengaging zone (4,104) to its upper portion and into the entrance of a cyclone separator (18,118), characterized in that the cracked mineral oil vapors are discharged from the outer extremity of the radially extending restricted passageway into a vertically disposed elongated restricted passageway (16,116) in fluid communication with the inlet of the cyclone separator so that the cracked mineral oil vapors are directed from the outer extremity of the radially extending restricted passageway into the cyclone separator.

2. A process according to Claim 1, wherein the suspension of catalyst particles in cracked mineral oil vapors is discharged in a downward direction from the radially extending restricted passageway.

3. A process according to Claim 1, wherein the catalyst and a minor portion of the cracked mineral oil vapors are discharged from the radially extending passageway in a downward direction into the interior of the disengaging vessel and the remaining cracked mineral oil vapors are discharged in an upward direction into the vertically disposed restricted passageway.

4. A process according to any one of Claims 1 to 3, wherein the cracked mineral oil vapors are cooled in the vertically disposed restricted passageway to a temperature below 540°C.

5. A process according to Claim 4, wherein cooling is achieved by indirect heat exchange.

6. A process according to Claim 4, wherein cooling is achieved by liquid or gaseous quench.

7. Apparatus for the separation of catalyst particles from a gas stream which comprises:

(a) a disengaging vessel (104) serving as a reservoir for collected catalyst particles,

(b) a vertically disposed elongated tubular conduit (102) having an upstream end and a downstream end, the latter terminating within the disengaging vessel,

(c) a radially extending restricted passageway (106) having an inlet communicating with the elongated tubular conduit at the downstream end of the latter and an opening (110) along it lower side adapted to discharge catalyst particles in a downward direction as a substantially confined catalyst stream,

(d) a cyclone separator (118) adapted to separate entrained catalyst particles from the gas stream, to discharge separated catalyst particles into the disengaging vessel and to discharge the gas stream externally of the disengaging vessel,

(e) a vertically disposed catalyst stripping passageway (112) positioned below and in open communication with the lower opening of the radially extending restricted passageway and adapted to receive the substantially confined catalyst stream into its upper end, and

(f) a vertically disposed elongated restricted passageway (116) in direct fluid communication with the upper end of the catalyst stripping passageway and the inlet of the cyclone separator and in open fluid communication with the bottom opening of the radially extending restricted passageway, the vertically disposed restricted passageway surrounding and containing the radially extending restricted passageway.

8. Apparatus for the separation of catalyst particles from a gas stream which comprises:

(a) a disengaging vessel (4) serving as a reservoir for collected catalyst particles,

(b) a vertically disposed elongated tubular conduit (2) having an upstream end and a downstream end, the latter terminating within the disengaging vessel,

(c) a radially extending restricted passageway (6) having an inlet communicating with said elongated tubular conduit at the downstream end of the latter, an opening (10) along its lower side and an opening in its uppers side at its downstream extremity, the lower opening being adapted to discharge catalyst particles in a downward direction as a substantially confined catalyst stream into the interior of the disengaging vessel,

(d) a cyclone separator (18) adapted to separate entrained catalyst particles from the gas stream, to discharge separated catalyst particles into the disengaging vessel and to discharge the gas stream externally of the disengaging vessel, and

(e) a vertically disposed elongated restricted passageway (16) communicating with the upper opening of the downstream extremity of the radially extending restricted passageway and the inlet of the cyclone separator.

9. Apparatus according to Claim 8, including a second cyclone separator (28) having an inlet communicating with the interior of the disengaging vessel and a gas outlet (30) communicating with exterior of the disengaging vessel.

10. Apparatus according to any one of Claims 7 to 9, wherein the vertically disposed restricted passageway contains means (116A) for cooling the gas stream.

**Patentansprüche**

1. Verfahren zum katalytischen Fluid-Cracken von Mineralöl, welches umfaßt:
das katalytische Cracken des Mineralöls durch Leiten einer Suspension von Katalysatorpartikeln in Mineralöldampf aufwärts durch eine Steigrohrreaktionszone unter Crackbedingungen in eine Abscheidungszone, worin die Katalysatorpartikel von den gecrackten Mineralöldämpfen abgetrennt werden, Regenerierung der Katalysatorpartikel, um die kohlenstoffhaltigen Ablagerungen zu entfernen und Leiten der regenerierten Katalysatorpartikel zur Steigrohrreaktionszone, wobei die Katalysatorpartikel von den gecrackten Mineralöldämpfen durch die folgenden Stufen abgetrennt werden:

(a) Entladen der Suspension der Katalysatorpartikel in den gecrackten Mineralöldämpfen aus dem Steigrohr (2,102) nach außen durch eine Öffnung in den oberen Umfang des Steigrohrs und durch einen sich radial erstreckenden beschränkten Durchgang (6,106) mit einer Öffnung (10,110) in seiner unteren Seite, um einen im wesentlichen begrenzten Katalysatorstrom zu erzeugen, der sich in abwärtiger Richtung im allgemeinen getrennt von den gecrackten Mineralöldämpfen entläd, wobei sich der beschränkte Durchgang nach unten benachbart zu seinem äußeren Ende krümmt, um eine Abwärtsbewegung auf dem begrenzten Katalysatorstrom in dem Durchgang zu erzeugen, der ausreichend ist, um den Strom abwärts in das offene obere Ende des Katalysator-Abstreifdurchganges (12,112) zu richten, der unter dem äußeren Ende des Durchganges angeordnet ist, um die Katalysatorpartikel getrennt von den entladenen, gecrackten Mineralöldämpfen zu halten; und

(b) Leiten der Mineralölcrackdämpfe durch die Abscheidungszone (4,104) zu ihrem oberen Abschnitt und in den Zugang eines Zyklon-Abscheiders (18,118),
dadurch gekennzeichnet, daß die gecrackten Mineralöldämpfe von dem äußeren Rand des sich radial erstreckenden beschränkten Durchganges in einem vertikal angeordneten gestreckten beschränkten Durchgang (16,116) in Fluidverbindung mit dem Einlaß des Zyklon-Abscheiders entladen werden, so daß die gecrackten Mineralöldämpfe von dem außeren Rand des sich radial erstreckenden beschränkten Durchganges in den Zyklon-Abscheider gerichtet werden.

2. Verfahren nach Anspruch 1, worin die Suspension der Katalysatorpartikel in den gecrackten Mineralöldämpfen in abwärtiger Richtung aus dem sich radial erstreckenden beschränkten Durchgang entladen werden.

3. Verfahren nach Anspruch 1, worin der Katalysator und ein geringer Anteil der gecrackten Mineralöldämpfe aus dem sich radial erstreckenden beschränkten Durchgang in eine abwärtige Richtung in das Innere des Abscheidungsgefäßes entladen werden und die verbleibenden gecrackten Mineralöldämpfe in eine Aufwärtsrichtung in den vertikal angeordneten beschränkten Durchgang entladen werden.

4. Verfahren nach einem der Ansprüche 1 bis 3, worin die gecrackten Mineralöldämpfe in dem vertikal angeordneten beschränkten Durchgang auf eine Temperatur unter 540°C abgekühlt werden.

5. Verfahren nach Anspruch 4, worin das Kühlen durch indirekten Wärmeaustausch erreicht wird.

6. Verfahren nach Anspruch 4, worin das Kühlen durch Flüssigkeits- oder Gasabschrecken erreicht wird.

7. Vorrichtung zur Abtrennung von Katalysatorpartikeln aus einem Gasstrom, welche umfaßt:

(a) ein Abscheidungsgefäß (104), das als Behälter für die gesammelten Katalysatorpartikel dient;

(b) eine vertikal angeordnete verlängerte röhrenförmige Leitung (102) mit einem stromaufwärtigen und einem stromabwärtigen Ende, wobei das Letztere innerhalb des Abscheidungsgefäßes abschließt;

(c) ein sich radial erstreckender beschränkter Durchgang (106) mit einem Einlaß, der mit der verlängerten röhrenförmigen Leitung an dem stromabwärtigen Ende der Letzteren verbunden ist und mit einer Öffnung (110) entlang seiner unteren Seite, die so angepaßt ist, um die Katalysatorpartikel in einer Abwärtsrichtung als einen im wesentlichen begrenzten Katalysatorstrom zu entladen;

(d) ein Zyklon-Abscheider (118), der so angepaßt ist, um die eingetretenen Katalysatorpartikel aus dem Gasstrom abzutrennen, um die abgetrennten Katalysatorpartikel in das Abscheidungsgefäß zu entladen und den Gasstrom außerhalb des Abscheidungsgefäßes zu entladen;

(e) einen vertikal angeordneten Katalysator-Abstreifdurchgang (112), der unterhalb und in offener Verbindung mit der unteren Öffnung des sich radial erstreckenden beschränkten Durchganges angeordnet ist und so angepaßt ist, um den im wesentlichen begrenzten Katalysatorstrom in seinem oberen Ende aufzunehmen; und

(f) einen vertikal angeordneten verlängerten beschränkten Durchgang (116) in direkter Fluid-Verbindung mit oberen Ende des Katalysator-Abstreifdurchganges und dem Einlaß des Zyklon-Abscheiders und in offener Fluid-Verbindung mit der Unterseitenöffnung des sich radial erstreckenden beschränkten Durchganges, wobei der vertikal angeordnete beschränkte Durchgang den sich radial erstreckenden beschränkten Durchgang umgibt und enthält.

8. Vorrichtung zur Abtrennung von Katalysatorpartikeln aus einem Gasstrom, welche umfaßt:

(a) ein Abscheidungsgefäß (4), das als Behälter für die gesammelten Katalysatorpartikel dient;

(b) eine vertikal angeordnete verlängerte röhrenförmige Leitung (2) mit einem stromaufwärtigen und einem stromabwärtigen Ende, wobei das Letztere mit dem Abscheidungsgefäßt abschließt;

(c) eine sich radial erstreckenden beschränkter Durchgang (6) mit einem Einlaß, der mit der verlängerten röhrenförmigen Leitung an dem stromabwärtigen Ende der Letzteren verbunden ist, einer Öffnung (10) entlang seiner Unterseite und einer Öffnung in seiner Oberseite an seinem stromabwärtigen Rand, wobei die untere Öffnung so angepaßt ist, um die Katalysatorpartikel in einer stromabwärtigen Richtung als einen im wesentlichen begrenzten Katalysatorstrom in das Innere des Abscheidungsgefäßes zu entladen;

(d) einen Zyklon-Abscheider (18), der so angepaßt ist, um die eingetretenen Katalysatorpartikel aus dem Gasstrom abzutrennen, um die abgetrennten Katalysatorpartikel in das Abscheidungsgefäß zu entladen und den Gasstrom außerhalb des Abscheidungsgefäßes zu entladen; und

(e) einen vertikal angeordneten verlängerten beschränkten Durchgang (16), der mit der oberen Öffnung des stromabwärtigen Randes des sich radial erstreckenden beschränkten Durchganges und dem Einlaß des Zyklon-Abscheiders verbunden ist.

9. Vorrichtung nach Anspruch 8, die einen zweiten Zyklon-Abscheider (28) mit einem Einlaß umfaßt, der mit dem Inneren des Abscheidungsgefäßes in Verbindung ist und mit einem Gasauslaß (30), der mit dem Äußeren des Abscheidungsgefäßes in Verbindung steht.

10. Vorrichtung nach einem der Ansprüche 7 bis 9, worin der vertikal angeordnete beschränkte Durchgang eine Einrichtung (116A) zum Kühlen des Gasstromes enthält.

**Revendications**

1. Un procédé de craquage catalytique en lit fluidisé d'une huile minérale qui comprend un craquage catalytique de l'huile minérale par passage veurs le haut d'une suspension de particules de catalyseur dans la vapeur d'huile minérale à travers une zone de réaction ascendante dans des conditions de craquage vers une zone de séparation où les particules de catalyseur sont séparées des vapeurs de l'huile minérale craquées, par régénération des particules de catalyseur pour enlever les dépôts carbonés et par passage des particules du catalyseur régénéré vers la zone de réaction ascendante, les particules de catalyseur étant séparées des vapeurs d'huile minérale craquées par les étapes suivantes:

(a) déchargement de la suspension des particules de catalyseur dans les vapeurs d'huile minérale craquées vers l'extérieur de la colonne ascendante (2, 102) par une ouverture dans la périphérie supérieure de la colonne ascendante et à travers un passage (6, 106) étroit disposé radialement ayant une ouverture (10, 110) dans sa partie inférieure pour produire un courant de catalyseur pratiquement isolé qui se décharge dans une direction descendante, généralement séparé des vapeurs d'huile minérale craquées, le passage étroit s'incurvant vers le bas dans la partie adjacente à son extrémité externe pour induire un mouvement descendant du courant de catalyseur isolé dans le passage suffisant pour diriger le courant vers le bas dans l'extrémité supérieure ouverte du passage (12, 112) du système à séparation par entraînement du catalyseur, placé en-dessous de la sortie ouvert du passage pour maintenir les particules de catalyseur séparées desdites vapeurs d'huile minérale craquées déchargées; et

(b) passage des vapeurs d'huile minérale de craquage à travers la zone de dégagement (4, 104) à sa partie supérieure et dans l'entrée du séparateur cyclonique (18, 118), caractérisé en ce que les vapeurs d'huile minérale craquées sont déchargées à partir de l'extrémité externe du passage étroit disposé radialement, dans un passage étroit allongé disposé verticalement (16, 116) en communication fluide avec l'entrée du séparateur cyclonique, de sorte que les vapeurs d'huile minérale craquées sont dirigées à partir de l'extrémité de sortie du passage étroit disposé radialement dans le séparateur du cyclone.

2. Procédé selon la revendication 1, dans lequel la suspension de particules de catalyseur dans les vapeurs d'huile minérale craquées est déchargée dans une direction descendante à partir du passage étroit disposé radialement.

3. Procédé selon la revendication 1, dans lequel le catalyseur et une fraction mineure des vapeurs d'huile minérale craquées sont déchargés à partir du passage étroit disposé radialement dans une direction descendante à l'intérieur du récipient de dégagement et les vapeurs d'huile minérale craquées restantes sont déchargés dans une direction ascendante dans le passage étroit disposé verticalement.

4. Procédé selon l'une quelconque des revendications 1 à 3, dans lequel les vapeurs d'huile minérale craquées sont refroidies dans le passage étroit disposé verticalement à une température inférieure à 540°C.

5. Procédé selon la revendication 4, dans lequel le refroidissement est accompli par un échange de chaleur indirect.

6. Procédé selon la revendication 4, dans lequel le refroidissement est effectué par refroidissement rapide par un liquide ou un gaz.

7. Appareil pour la séparation des particules de catalyseur du courant du gaz, qui comprend:

(a) un récipient de dégagement (104) servant de réservoir pour les particules de catalyseur collectées;

(b) un conduit (102) tubulaire allongé, disposé verticalement, ayant une extrémité supérieure et une extrémité inférieure, cette dernière se terminant à l'intérieur du réservoir de dégagement;

(c) un passage étroit disposé radialement (106) ayant une communication d'entrée avec le conduit tubulaire allongé à l'extrémité inférieure de ce dernier et une ouverture (110) le long de son côté inférieur apte à décharger les particules de catalyseur dans une direction descendante sous forme d'un courant pratiquement séparé de catalyseur;

(d) un séparateur de cyclone (118) apte à séparer les particules de catalyseur entraînées du courant de gaz pour décharger les particules de catalyseur séparées dans le récipient de dégagement et pour décharger le courant de gaz extérieurement au récipient de dégagement;

(e) un passage (112) d'entraînement à la vapeur du catalyseur disposé verticalement placé en-dessous et en communication ouverte avec l'ouverture inférieure du passage étroit disposé radialement et adapté pour recevoir le courant de catalyseur pratiquement isolé dans son extrémité supérieure; et

(f) un passage (116) étroit allongé, disposé verticalement, en communication directe fluide avec le partie supérieure du passage d'entraînement à la vapeur du catalyseur et avec l'entrée du séparateur de cyclone et en communication fluide ouverte avec l'ouverture située au fond du passage étroit disposé radialement, le passage étroit disposé verticalement entourant et contenant le passage étroit s'étendant radialement.

8. Appareil de séparation des particules de catalyseur du courant de gaz, qui comprend:

(a) un récipient (4) de dégagement servant de réservoir pour les particules de catalyseur;

(b) un conduit tubulaire (2) allongé, disposé verticalement, ayant une extrémité amont et une extrémité aval, la dernière se terminant à l'intérieur du récipient de dégagement;

(c) un passage (6) étroit, disposé radialement, ayant une communication d'entrée avec ledit conduit tubulaire allongé vers l'extrémité aval de ce dernier, et une ouverture (10) le long de son côté inférieur et une ouverture dans sa partie supérieure à son extrémité aval, l'ouverture inférieure étant adaptée pour décharger les particules de catalyseur dans une direction descendante sous forme d'un courant de catalyseur pratiquement isolé dans l'intérieur du récipient de dégagement;

(d) un séparateur cyclonique (18) apte à séparer les particules de catalyseur entraîné du courant de gaz pour décharger les particules de catalyseur séparées dans le récipient de dégagement et pour décharger le courant de gaz à l'extérieur du récipient de dégagement; et

(e) un passage (16) étroit allongé, disposé verticalement, communiquant avec l'ouverture supérieure de l'extrémité aval du passage étroit disposé radialement et avec l'entrée du séparateur cyclonique.

9. Appareil selon la revendication 8, incluant un second séparateur cyclonique (28) ayant une communication d'entrée avec l'intérieur du récipient de dégagement et un sortie pour les gaz (30) communiquant avec l'extérieur du récipient de dégagement.

10. Appareil selon l'une quelconque des revendications 7 à 9, dans lequel le passage étroit disposé verticalement contient des moyens (116A) pour refroidir le courant de gaz.

FIG. 1

FIG.2

FIG.3